# EUROPÄISCHE PATENTSCHRIFT

(11) **EP 3 197 815 B1**
(45) Veröffentlichungstag und Bekanntmachung des Hinweises auf die Patenterteilung: **12.09.2018**
(21) Anmeldenummer: 15738702.8
(22) Anmeldetag: 21.07.2015
(51) Int. Cl.: B66B 25/00, B66B 1/30, H02P 27/06

(54) **PERSONENTRANSPORTANLAGE MIT MINDESTENS EINEM WECHSELRICHTER**
PASSENGER TRANSPORT SYSTEM HAVING AT LEAST ONE INVERTER MODULE
INSTALLATION DE TRANSPORT DE PERSONNES COMPRENANT AU MOINS UN ONDULEUR

(30) Priorität: 24.09.2014 EP 14186208
(43) Veröffentlichungstag der Anmeldung: 02.08.2017
(73) Patentinhaber: Inventio AG, 6052 Hergiswil (CH)
(72) Erfinder: MARKS, Esteban, CH-8008 Zürich (CH); MATHEISL, Michael, A-2331 Vösendorf (AT); WEINBERGER, Karl, CH-6405 Immensee (CH)
(86) Internationale Anmeldenummer: PCT/EP2015/066673
(87) Internationale Veröffentlichungsnummer: WO 2016/045814

(56) Entgegenhaltungen:
- WO-A1-2010/042118
- CN-A- 102 139 823
- JP-A- 2010 143 758
- KR-A- 20110 136 928
- US-A- 5 135 097
- US-A1- 2009 301 819
- US-A1- 2010 327 795
- CHUN-HUNG LIU ET AL: "Reduced-cable smart motors using DC power line communication", PROCEEDINGS OF THE 2001 IEEE INTERNATIONAL CONFERENCE ON ROBOTICS AND AUTOMATION. ICRA 2001. SEOUL, KOREA, MAY 21 - 26, 2001; [PROCEEDINGS OF THE IEEE INTERNATIONAL CONFERENCE ON ROBOTICS AND AUTOMATION], NEW YORK, NY : IEEE, US, Bd. 4, 21. Mai 2001 (2001-05-21), Seiten 3831-3838, XP010550735, DOI: 10.1109/ROBOT.2001.933215 ISBN: 978-0-7803-6576-6

## Beschreibung

Die Erfindung betrifft eine Personentransportanlage, insbesondere eine Fahrtreppe, einen Fahrsteig oder eine Aufzugsanlage.

Personentransportanlagen der vorgenannten Art weisen einen Drehstrom- Antriebsmotor und eine Steuereinrichtung auf, wobei die Steuereinrichtung betriebsrelevante Signale der Personentransportanlage verarbeitet und den Drehstrom- Antriebsmotor unter Berücksichtigung der betriebsrelevanten Signale steuert. Die betriebsrelevanten Signale stammen beispielsweise vom Hauptschalter zum Ein- beziehungsweise Ausschalten der Personentransportanlage, von verschiedensten Sensoren wie Sicherheitsschalter, Impulsgeber, Encoder und dergleichen mehr und von Eingabeeinheiten, über welche die Benutzer Eingaben machen können.

Die Steuereinrichtung umfasst zumindest eine Recheneinheit, einen Arbeitsspeicher und einen nicht flüchtigen Speicher mit einem Steuerprogramm, das zur Steuerung und/oder Regelung der Personentransportanlage erforderlich ist. Des Weiteren kann eine solche Steuereinrichtung für den Service der Personentransportanlage und die Diagnostik notwendige Schnittstellen und Eingabemodule enthalten und ein Netzteil zur Spannungsversorgung aufweisen.

Zum Betrieb des Drehstrom- Antriebsmotors wird eine dreiphasige Wechselspannung benötigt. Da die meisten Stromversorgungsnetze Wechselspannung mit einer konstanten Frequenz von 50 Herz beziehungsweise 60 Herz zur Verfügung stellen, wird in Personentransportanlagen vorzugsweise ein Frequenzumrichter eingesetzt. Der Drehstrom- Antriebsmotor ist somit über den Frequenzumrichter mit dem Stromversorgungsnetz verbunden. Eine Personentransportanlage kann eine Fahrtreppe, ein Fahrsteig oder eine Aufzugsanlage sein.

Wie beispielsweise in der EP 1 518 815 A1 offenbart, befindet sich bei Aufzuganlagen die Steuereinrichtung in einem Bereich einer Aufzugsschachttüre. Der Frequenzumrichter ist meistens im Aufzugsschacht in der Nähe des Aufzugsmotors angeordnet. Dies deshalb, weil Frequenzumrichter durch ihre Leistungshalbleiterschalter erheblich Abwärme erzeugen. Ferner können deren elektrische und/oder magnetische Felder, beziehungsweise elektrische und/oder magnetische Wellen die Steuereinrichtung empfindlich stören. Zudem sind im Aufzugschacht zwischen dem Frequenzumrichter und dem Stromnetz elektromechanische Schütze und/oder Relais angeordnet, die erhebliche Schaltgeräusche verursachen. Auch Drosselspulen des Frequenzumrichters erzeugen erhebliche Betriebsgeräusche, weshalb auch dieser Geräusche wegen der Frequenzumrichter vorzugsweise im Aufzugschacht angeordnet wird.

Üblicherweise sind bei Fahrtreppen und Fahrsteigen die Steuereinrichtung und der Frequenzumrichter in der Nähe des Drehstrom- Antriebsmotors untergebracht. Um das bereits erwähnte Problem der Abwärme und der Lärmbelastung zu lösen, schlägt die US 5,135,097 A vor, die Steuereinrichtung und den Antriebsmotor vom Frequenzumrichter und dem Transformator räumlich zu trennen. Die Abwärme wird über die Wände und Abdeckungen der Maschinenräume an die Umgebung abgegeben.

Frequenzumrichter und Wechselrichter werden heutzutage als fertige Einheiten von verschiedenen Herstellern angeboten und in die vorgenannten Personentransportanlagen eingebaut. Die Frequenzumrichter weisen einen statischen oder gesteuerten Gleichrichter, einen Gleichspannungskreis mit mindesten einem Kondensator und/oder einer induktiven Last und einen Wechselrichter mit Leistungshalbleiterschaltern auf. Ferner weist der Frequenzumrichter beziehungsweise der Wechselrichter eine Umrichter- Steuerung auf, welche die Steuerdaten der Steuereinrichtung empfängt und weiterverarbeitet.

Die in zeitlicher Abfolge an die Umrichter-Steuerung übertragenen Steuerdaten der Steuereinrichtung beinhalten in maschinenlesbarer Form beispielsweise ein Beschleunigungsprofil, ein Verzögerungsprofil, die Drehzahl bei einer Schleichfahrt oder die zu erreichende Nenndrehzahl. Die Umrichter-Steuerung generiert aus diesen Steuerdaten Ansteuersignale beziehungsweise Steuerspannungen, welche an den Gate-Elektroden der Leistungshalbleiterschalter des Wechselrichters anliegen. Sofern ein rückspeisefähiger Frequenzumrichter eingesetzt wird, weist auch der Gleichrichter Leistungshalbleiterschalter auf, deren an den Gate- Elektroden anliegenden Ansteuersignale in der Umrichter-Steuerung generiert werden.

Die Generierung der Ansteuersignale in Form von Steuerspannungen erfordert eine hohe Rechenleistung des Prozessors der Umrichter- Steuerung. Ferner müssen mindestens ein Arbeitsspeicher und zumindest ein nicht flüchtiger Speicher zur Speicherung der Algorithmen in der Umrichter-Steuerung vorhanden sein. Der Prozessor der Umrichter-Steuerung generiert mittels dieser Algorithmen aus den Steuerdaten der Steuereinrichtung Steuerspannungen und Ansteuerströme, welche an den Gate- Elektroden der Leistungshalbleiterschalter anliegen. Der besseren Lesbarkeit wegen wird auf die Erwähnung von Ansteuerströmen verzichtet, auch wenn beim Anlegen von Steuerspannungen an den Gate-Elektroden immer auch kleine Ansteuerströme fließen.

Die Umrichter- Steuerung ist aufgrund der notwendigen Bauteile wie Prozessor, Arbeitsspeicher, Speichereinheit und stabilisierte Niederspannungsversorgung recht teuer. Zudem erfordert die Abschirmung der Umrichter- Steuerung und die Abwärme der Leistungshalbleiterschalter zusätzlichen Installationsaufwand innerhalb des Frequenzumrichters. Insbesondere beeinflusst die Abwärme auch die Lebensdauer der Umrichter- Steuerung. Des Weiteren erfordern die als fertige Einheiten konzipierten Frequenzumrichter und Wechselrichter einen recht großen Einbauraum mit ausreichendem Luftaustausch, damit es im Einbauraum aufgrund der Abwärme nicht zu heiß wird. Moderne Personentransportanlagen werden jedoch so konzipiert, dass sie einen möglichst geringen Einbauraum benötigen, wodurch beispielsweise in einem Kaufhaus die verfügbare Verkaufsfläche maximiert werden kann. Die CN 102 139 823 A, die WO 2010/042118 A1 und die US 2009/301819 A1 schlagen eine Umrichter-Anordnung mit voneinander getrennt angeordneten Komponenten vor.

Die Aufgabe der vorliegenden Erfindung ist es eine Stromversorgung für einen Drehstrom- Antriebsmotor einer Personentransportanlage zu schaffen, die kostengünstig ist, einen geringen Einbauraumbedarf erfordert und deren Abwärme möglichst nutzbringend eingesetzt werden kann.

Diese Aufgabe wird gelöst durch eine Personentransportanlage, die einen Drehstrom-Antriebsmotor und eine Steuereinrichtung aufweist, wobei die Steuereinrichtung betriebsrelevante Signale der Personentransportanlage verarbeitet und den Drehstrom-Antriebsmotor unter Berücksichtigung der betriebsrelevanten Signale steuert. Die Personentransportanlage weist zumindest ein Wechselrichtermodul mit Leistungshalbleiterschaltern auf, wobei die Gate- Elektroden der Leistungshalbleiterschalter unmittelbar durch die Steuereinrichtung angesteuert werden.

Das Wechselrichtermodul ist eingangsseitig mit einer Gleichspannungsquelle und ausgangsseitig mit dem Drehstrom- Antriebsmotor verbunden. Des Weiteren ist zwischen der Gleichspannungsquelle und dem Wechselrichtermodul ein Gleichspannungskreis vorhanden, wobei durch die Steuereinrichtung auf den Gleichspannungskreis modulierbare Ansteuersignale generierbar sind. Das Wechselrichtermodul weist einen Demodulator auf, durch welchen Demodulator die Ansteuersignale in, den einzelnen Gate- Elektroden der Leistungshalbleiterschalter zugeordnete Steuerspannungen wandelbar sind.

Das Wechselrichtermodul im Sinne der vorliegenden Erfindung ist ein Modul, das lediglich Leistungshalbleiterschalter, aber keine eigene Umrichter-Steuerung aufweist. Die zur Ansteuerung der Leistungshalbleiterschalter generierten Steuersignale beziehungsweise an den Gate-Elektroden anliegenden Steuerspannungen werden daher durch die Steuereinrichtung generiert. Zur Erzeugung des an den Motorklemmen des Drehstrom- Antriebsmotors anliegenden Drehstroms wird vorzugsweise ein Wechselrichtermodul mit mindestens sechs Leistungshalbleiterschaltern verwendet, deren Anschlüsse in bekannter Brückenschaltungs- Anordnung miteinander verbunden sind.

Diese Architektur weist enorme Vorteile auf. Zuerst einmal kann die bei handelsüblichen Wechselrichtern und Frequenzumrichter vorhandene Umrichter-Steuerung und deren Abschirmung eingespart werden. Dies ermöglicht, dass das Wechselrichtermodul sehr kompakte Abmessungen aufweist und mit geringem Installationsaufwand in die Personentransportanlage eingebaut werden kann. Ferner wird der Gleichstromkreis zusätzlich als Signalleitung verwendet, so dass Signalleitungen zwischen der Steuerung und dem Wechselrichtermodul weitgehend entfallen.

Da die Rechnerleistung der Prozessoren und die Speicherleistung der Arbeitsspeicher in den letzten Jahren stetig gesteigert wurden, sind selbst die mit kostengünstigen Prozessoren ausgerüsteten Steuereinrichtungen einer Personentransportanlage in Bezug auf die üblich zu verarbeitende Datenmenge erheblich überdimensioniert. Die zu verarbeitenden Daten stammen beispielsweise aus Sensoren, Encodern, Impulsgebern, Drehzahlwächtern, Lichtschranken, Sicherheitsschaltern, Eingabeeinheiten und dergleichen mehr, die in einer Personentransportanlage eingebaut sind um einen sicheren Fahrbetrieb zu ermöglichen und zu überwachen. Durch die Implementierung der normalerweise durch die Umrichter-Steuerung erbrachten Funktionen in die Steuereinrichtung, kann die ohnehin vorhandene, freie Rechnerkapazität, Arbeitsspeicherkapazität und Speicherkapazität des nichtflüchtigen Speichers der Steuereinrichtung genutzt werden, um die Ansteuersignale der Gate-Elektroden zu generieren. Selbstverständlich können gleichzeitig beziehungsweise alternativ auch flüchtige Speicher hierfür verwendet werden, die damit eine Fernsteuerung, beispielsweise über das Internet erlauben.

Die Implementierung der Umrichter-Steuerungsfunktionen in der Steuereinrichtung führt zu einer Reduktion der Schnittstellen und zu einer zusätzlichen Flexibilität der gesamten Stromversorgung des Drehstrom-Antriebsmotors, da bezüglich der Generierung von Steuersignalen zur Ansteuerung der Leistungshalbleiterschalter keine Vorgaben von Dritten beachtet werden müssen, wie sie beispielsweise von Herstellern handelsüblicher Frequenzumrichter und Wechselrichter gemacht werden, damit deren Umrichter-Steuerung die Eingangssignale in der richtigen Form erhält. Durch die Implementierung wird auch die Reaktionsgeschwindigkeit der gesamten Steuereinrichtung erhöht, da wie vorangehend beschrieben, weniger Schnittstellen vorhanden sind.

Auch wenn die Steuereinrichtung die Ansteuersignale der Gate-Elektroden generiert, kann das Wechselrichtermodul in ausreichender Distanz von der Steuereinrichtung angeordnet werden, so dass dessen Abwärme (Warmluft, Strahlungswärme) die Steuereinrichtung nicht negativ beeinflusst.

Da das Wechselrichtermodul wegen der fehlenden Umrichter-Steuerung und, bei von der Steuereinrichtung distanzierter Anordnung, wegen der zumindest stark reduzierten Abschirmung und Kühlung auch wesentlich kleiner ist als ein handelsüblicher Wechselrichter gleicher Leistung, kann dieses auch viel einfacher in ohnehin vorhandenen Zwischenräumen der Personentransportanlage untergebracht werden. Zudem kann dessen Abwärme genutzt werden, um beispielsweise eine KondensatBildung im Innern einer Fahrtreppe oder eines Fahrsteiges oder im Aufzugschacht zu verhindern. Auch die bei Fahrtreppen und Fahrsteigen gebräuchlichen umlaufenden Handläufe können beispielsweise mit einem im Balustradensockel angeordneten Wechselrichtermodul und/oder dem weiter unten beschriebenen Gleichrichtermodul beheizt werden, so dass der Handlauf für die Benutzer eine angenehme Temperatur aufweist und immer trocken ist. Selbstverständlich kann auch das Stufenband der Fahrtreppe oder das Palettenband des Fahrsteiges beheizt werden, wenn das Wechselrichtermodul und/oder das Gleichrichtermodul unterhalb des Stufenbandes oder Palettenbandes angeordnet wird.

Wie weiter oben erwähnt, ist das Wechselrichtermodul eingangsseitig mit einer Gleichspannungsquelle verbunden. Diese Gleichspannungsquelle kann beispielsweise eine Photovoltaikanlage mit einem Gleichspannungs- Energiespeicher sein. Die Photovoltaikanlage kann zum Beispiel auf einem Dach desjenigen Gebäudes installiert sein, in dem die Personentransportanlage eingebaut ist. Der Gleichspannungs-Energiespeicher dient dazu, Leistungsschwankungen der Photovoltaikanlage zu kompensieren. Dies kann beispielsweise einen Akkumulator oder ein Kondensator mit hoher Speicherkapazität (Supercapacitor) sein.

Anstelle der Photovoltaikanlage kann die Personentransportanlage ein als Gleichspannungsquelle dienendes Gleichrichtermodul aufweisen. Das Gleichrichtermodul ist eingangsseitig mit einem Stromversorgungsnetz und ausgangsseitig mit dem Wechselrichtermodul verbunden.

Da Personentransportanlagen je nach Förderrichtung und Beladung mittels des Drehstrom- Motors auch elektrische Energie erzeugen können, ist das Gleichrichtermodul vorzugsweise steuerbar, um elektrische Energie des Gleichspannungskreises in ein Stromversorgungsnetz zurück zu speisen. Ein steuerbares Gleichrichtermodul weist wie das Wechselrichtermodul ebenfalls Leistungshalbleiterschalter auf. Auch die Gate-Elektroden der Leistungshalbleiterschalter des steuerbaren Gleichrichtermoduls können unmittelbar durch die Steuereinrichtung der Personentransportanlage angesteuert sein. Selbstverständlich müssen der Steuereinrichtung Informationen über die Frequenz und die Nulldurchgänge der Phasen des Stromversorgungsnetzes zugeführt werden, um bei der Rückspeisung das als Wechselrichtermodul dienende steuerbare Gleichrichtermodul mit dem Stromversorgungsnetz zu synchronisieren.

Das steuerbare Gleichrichtermodul ist eingangsseitig mit einem Stromversorgungsnetz und ausgangsseitig mit dem Wechselrichtermodul verbunden, so dass zwischen den beiden Modulen ein Gleichspannungskreis vorhanden ist. Selbstverständlich ist auch eine Kombination der vorgenannten Gleichspannungsquellen möglich, so dass das Wechselrichtermodul der Personentransportanlage eingangsseitig an einem Gleichspannungskreis angeschlossen ist, welcher durch eine Photovoltaikanlage, ein steuerbares Gleichrichtermodul und gegebenenfalls durch einen oder mehrere Gleichspannungs-Energiespeicher gespeist wird. Anstelle der Photovoltaikanlage oder ergänzend kann auch eine Windkraftanlage oder eine Kleinwasserkraftanlage am Gleichspannungskreis angeschlossen sein.

Wie bereits erwähnt, ist zwischen dem Wechselrichtermodul und der Gleichspannungsquelle ein Gleichspannungskreis vorhanden. Um die im Gleichspannungskreis vorhandene Gleichspannung zu glätten, können mindestens ein Kondensator und/oder eine induktive Last im Gleichspannungskreis angeordnet sein.

Zudem kann im Gleichspannungskreis ein Überwachungsmodul angeordnet sein. Aufgrund der Überwachungssignale des Überwachungsmoduls können durch die Steuereinrichtung für das steuerbare Gleichrichtermodul entsprechende Steuerspannungen generiert werden, so dass entweder elektrische Energie vom Stromversorgungsnetz in den Gleichspannungskreis oder elektrische Energie vom Gleichspannungskreis in das Stromversorgungsnetz eingespeist werden.

Analog zum Wechselrichtermodul können auch für das steuerbare Gleichrichtermodul Steuersignale durch die Steuereinrichtung generiert werden, die auf den Gleichspannungskreis modulierbar sind. Das steuerbare Gleichrichtermodul weist dann ebenfalls wie das Wechselrichtermodul einen Demodulator auf. Durch den Demodulator können die Steuersignale in, den einzelnen Gate- Elektroden der Leistungshalbleiterschalter zugeordnete Steuerspannungen umgewandelt werden. Auch wenn die an den Gate-Elektroden anliegenden Steuerspannungen erst im Demodulator erzeugt werden, sind die Gate-Elektroden trotzdem unmittelbar mit der Steuereinrichtung verbunden, da im Demodulator lediglich eine direkte Umwandlung von Steuersignalen in Steuerspannungen erfolgt und nicht die Berechnung und Generierung der einzelnen Steuerspannungen beziehungsweise Steuerspannungskurven. Die von der Steuereinrichtung generierten Steuersignale sind beispielsweise Impulse unterschiedlicher Frequenz, wobei jedem Leistungshalbleiterschalter eine bestimmte Frequenz zugeordnet ist. Im Demodulator wird dann beispielsweise als Nutzsignal die Amplitudenhöhe dieser zugeordneten Frequenz herangezogen und diese in eine an der Gate-Elektrode des zugeordneten Leistungshalbleiterschalters anliegende Steuerspannung gewandelt.

Um die Abwärme in der Personentransportanlage zu verteilen, können beispielsweise das Wechselrichtermodul im Umfeld des Drehstrom- Antriebsmotors und das Gleichrichtermodul im Umfeld der Steuereinrichtung angeordnet sein.

Wenn die Personentransportanlage eine Fahrtreppe oder Fahrsteig ist, kann beispielsweise das Wechselrichtermodul in einem ersten Balustradensockel und das Gleichrichtermodul in einem zweiten Balustradensockel der Fahrtreppe oder des Fahrsteiges angeordnet sein, so dass in den Balustradensockel geführte, umlaufende Handläufe durch die Abwärme des Gleichrichtermoduls beziehungsweise des Wechselrichtermoduls erwärmbar beziehungsweise aufwärmbar sind. Selbstverständlich können das Gleichrichtermodul auch in einem ersten Umlenkbereich der Fahrtreppe oder des Fahrsteiges, das Wechselrichtermodul in einem zweiten Umlenkbereich der Fahrtreppe oder des Fahrsteiges und die Steuerung in einem externen Steuerschrank angeordnet sein. Mit der Abwärme des Wechselrichtermoduls und des Gleichrichtermoduls kann beispielsweise auch das Stufenband der Fahrtreppe oder das Palettenband des Fahrsteiges erwärmt werden.

Wenn die Personentransportanlage eine Aufzugsanlage ist, können beispielsweise das Wechselrichtermodul in einem Aufzugsschacht der Aufzugsanlage und das Gleichrichtermodul in einem Türpfosten einer Schachttüre des Aufzugsschachtes angeordnet sein.

Wie vorangehend beschrieben, können das Wechselrichtermodul und das steuerbare Gleichrichtermodul auf unterschiedliche Weise mit der die Steuersignale beziehungsweise Steuerspannungen generierenden Steuerung unmittelbar verbunden sein. Beide Module weisen jeweils zumindest sechs Leistungshalbleiterschalter sowie einen Anschluss für den Minuspol des Gleichspannungskreises und einen Anschluss für den Pluspol des Gleichspannungskreises auf. Zumindest das Wechselrichtermodul weist einen Demodulator auf. Ferner können eine Drosselspule als induktive Last und/oder mindestens ein Kondensator im Modul angeordnet sein. Auch weitere Bauelemente wie Sensoren aller Art können in den Modulen angeordnet werden. Ferner können für beide Module beispielsweise baugleiche Gehäuse, baugleiche Leistungshalbleiterschalter, baugleiche Demodulatoren, baugleiche Anschlüsse, baugleiche Printplatten und dergleichen mehr verwendet werden. Um Herstellungskosten zu sparen, sind vorzugsweise möglichst viele Bauteile der Module baugleich. Vorzugsweise sind das Wechselrichtermodul und das steuerbare Gleichrichtermodul komplett baugleich ausgeführt.

Wie vorangehend ausführlich beschrieben, bilden die an verschiedenen Stellen der Personentransporteinrichtung eingebauten Module mit dem Teil der Steuerung, welcher die Steuerspannungen beziehungsweise Steuersignale generiert, einen dezentralisierten modularen Wechselrichter oder dezentralisierten, modularen Frequenzumrichter.

Der Aufbau und die Anordnung der erfindungsgemässen Stromversorgung des Drehstrom-Antriebsmotors einer Personentransportanlage werden nachfolgend anhand von Beispielen und mit Bezugnahme auf die Zeichnungen näher erläutert. Darin zeigen:
- Figur 1:: in schematischer Darstellung eine Fahrtreppe mit einem Tragwerk beziehungsweise Fachwerk und zwei Umlenkbereichen, wobei im Tragwerk ein dezentralisierter, modular aufgebauter Frequenzumrichter sowie Laufschienen und zwischen den Umlenkbereichen ein umlaufendes Stufenband angeordnet sind;
- Figur 2:: in schematischer Darstellung einen Fahrsteig mit einem Tragwerk und zwei Umlenkbereichen, wobei im Tragwerk ein dezentralisierter, modular aufgebauter Frequenzumrichter sowie Laufschienen und zwischen den Umlenkbereichen ein umlaufendes Palettenband angeordnet sind;
- Figur 3:: in schematischer Darstellung ein Teil eines mehrstöckigen Gebäudes mit einer Aufzugsanlage mit einem dezentralisierten, modular aufgebauten Frequenzumrichter;
- Figur 4:: in schematischer Darstellung aber detaillierter, der Aufbau des in der Figur 3 dargestellten, dezentralisierten, modularen Frequenzumrichters;
- Figur 5:: in schematischer Darstellung aber detaillierter, der Aufbau des in der Figur 1 dargestellten, dezentralisierten, modularen Frequenzumrichters.

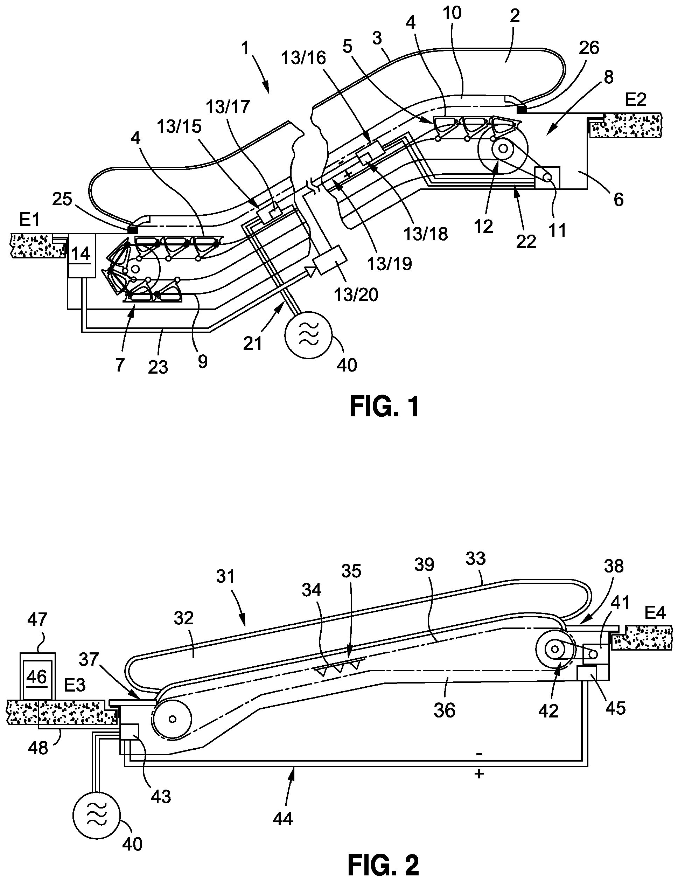

Figur 1 zeigt schematisch in der Seitenansicht eine als Personentransporteinrichtung dienende Fahrtreppe 1, die eine erste Etage E1 mit einer zweiten Etage E2 verbindet. Die Fahrtreppe 1 weist ein nur durch seine Umrisslinien dargestelltes Tragwerk 6 beziehungsweise Fachwerk 6 mit zwei Umlenkbereichen 7, 8 auf, zwischen denen ein Stufenband 5 umlaufend geführt ist. Das Stufenband 5 weist Zugmittel 9 auf, an denen Stufen 4 angeordnet sind. Ein Handlauf 3 ist an einer Balustrade 2 angeordnet. Die Balustrade 2 ist am unteren Ende mittels eines Balustradensockels 10 mit dem Tragwerk 6 verbunden. Die Fahrtreppe 1 weist eigentlich zwei Balustraden 2 auf, wobei in der Seitenansicht nur eine Balustrade 2 sichtbar ist.

Die Fahrtreppe 1 weist ferner einen Drehstrom-Antriebsmotor 11 auf, durch den das Stufenband 5 über einen untersetzenden Antriebsstrang 12 beziehungsweise über ein Untersetzungsgetriebe 12 angetrieben wird. Der Drehstrom-Antriebsmotor 11 wird aus einem Stromversorgungsnetz 40 mit elektrischer Energie versorgt. Zwischen dem Stromversorgungsnetz 40 und dem Drehstrom- Antriebsmotor 11 ist ein modular aufgebauter Frequenzumrichter 13 angeordnet, der ein steuerbares Gleichrichtermodul 15 mit nicht dargestellten Leistungshalbleiterschaltern, einen Gleichspannungskreis 19, sowie ein Wechselrichtermodul 16 mit nicht dargestellten Leistungshalbleiterschaltern aufweist. Die Verbindungsleitung 21 zwischen dem Stromversorgungsnetz 40 und dem steuerbaren Gleichrichtermodul 15 ist zumindest dreiphasig ausgeführt, ebenso die Verbindungsleitung 22 zwischen dem Wechselrichtermodul 16 und dem Drehstrom-Antriebsmotor 11. Sowohl das Wechselrichtermodul 16 als auch das steuerbare Gleichrichtermodul 15 sind unterhalb des Handlaufs 3 im Balustradensockel 10 angeordnet, so dass deren Abwärme den rücklaufenden Abschnitt des Handlaufs 3 beheizt. Da jede Fahrtreppe 1 und jeder Fahrsteig jeweils zwei umlaufende Handläufe 3 aufweist, deren rücklaufender Abschnitt jeweils innerhalb eines Balustradensockels 10 geführt sind, werden vorzugsweise das Wechselrichtermodul 16 in dem einen Balustradensockel 10 und das steuerbare Gleichrichtermodul 15 im anderen Balustradensockel 10 angeordnet, so dass beide Handläufe 3 mit Abwärme beheizt werden können.

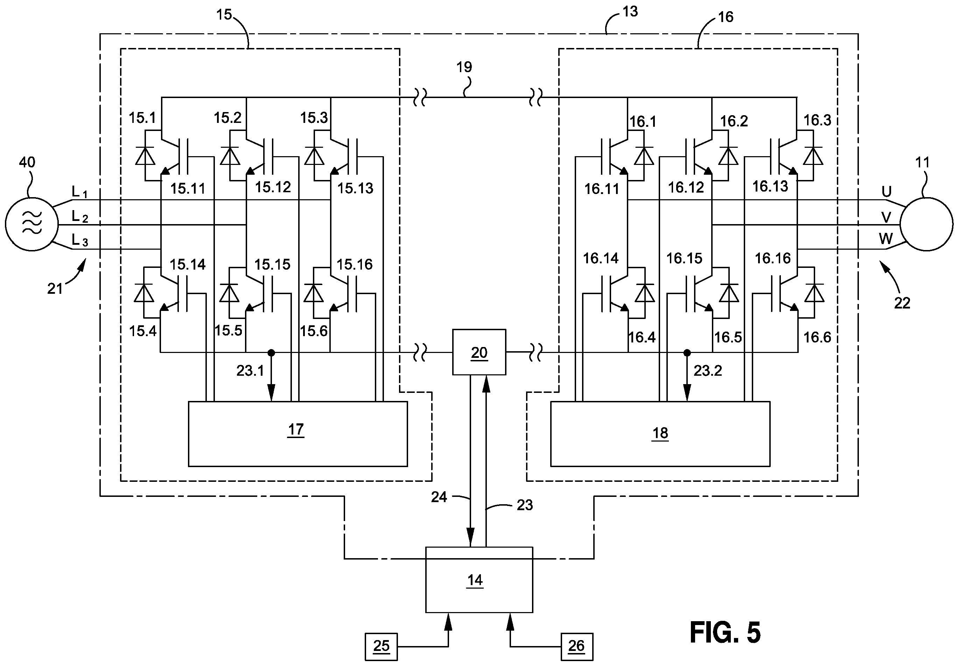

Das steuerbare Gleichrichtermodul 15 und das Wechselrichtermodul 16 verfügen je über einen Demodulator 17, 18, welcher über den Gleichspannungskreis 19 Steuersignale zur Ansteuerung der Gate-Elektroden der Leistungshalbleiterschalter empfängt. Diese Steuersignale werden mittels eines Modulators 20 auf den Gleichspannungskreis 19 aufmoduliert. Der Modulator 20 empfängt die Steuersignale über eine Signalleitung 23 von einer Steuereinrichtung 14, welche im Umlenkbereich 7 der ersten Etage E1 angeordnet ist. Eine detailliertere Beschreibung erfolgt weiter unten in Zusammenhang mit Figur 5.

Die Steuereinrichtung 14 generiert die Steuersignale mittels in der Steuereinrichtung 14 gespeicherter Algorithmen sowie unter Berücksichtigung von in der Steuereinrichtung 14 verarbeiteten betriebsrelevanten Signalen. Diese betriebsrelevanten Signale stammen beispielsweise aus Sensoren 25, 26, welche das Herannahen eines Benutzers erfassen. Weitere betriebsrelevante Signale können von Encodern, Sicherheitsschaltern, Impulsgebern, Drehzahlwächtern, Radarsensoren, Lichtschranken, Eingabeeinheiten und dergleichen mehr stammen, die in einer Personentransportanlage eingebaut sind, um einen sicheren Fahrbetrieb zu ermöglichen und zu überwachen.

Figur 2 zeigt schematisch in der Seitenansicht ein als Personentransporteinrichtung dienender Fahrsteig 31, welcher ähnlich wie die in der Figur 1 dargestellte Fahrtreppe 1 aufgebaut ist. Der Fahrsteig 31 weist zwei Balustraden 32 (in der Seitenansicht ist nur eine sichtbar) mit Balustradensockel und Handlauf 33, ein Tragwerk 36, sowie zwei Umlenkbereiche 37, 38 auf. Im Unterschied zur Fahrtreppe 1 aus der Figur 1, ist zwischen den Umlenkbereichen 37, 38 des Fahrsteiges 31 kein Stufenband, sondern ein Palettenband 35 umlaufend angeordnet. Das Palettenband 35 weist Zugmittel 39 auf, an denen Paletten 34 angeordnet sind. Als Zugmittel 39 können beispielsweise Gelenkketten, Riemen, Seile und dergleichen mehr verwendet werden, Der Fahrsteig 31 verbindet beispielsweise eine dritte Etage E3 mit einer vierten Etage E4. Der Fahrsteig 31 kann aber auch zwei Bereiche eines Bauwerks miteinander verbinden, die auf derselben Ebene beziehungsweise Etage liegen. Solche Fahrsteige 31 sind beispielsweise oft in Flughafengebäuden installiert.

Der Fahrsteig 31 weist ferner einen Drehstrom-Antriebsmotor 41 auf, durch den das Palettenband 35 über einen untersetzenden Antriebsstrang 42 beziehungsweise über ein Untersetzungsgetriebe 42 angetrieben wird. Der Drehstrom-Antriebsmotor 41 wird aus einem Stromversorgungsnetz 40 mit elektrischer Energie versorgt.

Der Fahrsteig 31 des vorliegenden Ausführungsbeispiels überwindet nur eine geringe Höhe weshalb bei einer abwärts gerichteten Förderung von Benutzern nur wenig Bremsleistung vom Drehstrom- Antriebsmotor 41 erbracht werden muss. Daher fällt auch nur sehr wenig Bremsenergie an, die in ein Stromversorgungsnetz 40 zurückgespeist werden könnte. Aus diesem Grunde ist ein statischer Gleichrichter 43 vorgesehen, der eingangsseitig mit der Spannungsquelle 40 und ausgangsseitig mit einem Gleichspannungskreis 44 verbunden ist. Der statische Gleichrichter 43 ist im Umlenkbereich 37 der dritten Etage E3 angeordnet.

Im Umlenkbereich 38 der vierten Etage E4, in dem auch der Drehstrom- Antriebsmotor 41 untergebracht ist, ist ein Wechselrichtermodul 45 angeordnet. Das Wechselrichtermodul 45 ist eingangsseitig mit dem Gleichspannungskreis 44 und ausgangsseitig mit dem Drehstrom- Antriebsmotor 41 verbunden. Somit erstreckt sich der Gleichspannungskreis 44 zwischen den beiden Umlenkbereichen 37, 38 des Fahrsteiges 31. Der besseren Übersicht wegen sind die beiden stromführenden Kabellitzen beziehungsweise Kabel des Gleichspannungskreises 44 außerhalb des Tragwerks 36 angeordnet. Selbstverständlich können die spannungsführenden Kabellitzen des Gleichspannungskreises 44 auch im Tragwerk 36 angeordnet sein.

Ferner weist der Fahrsteig 31 eine Steuereinrichtung 46 auf, die in einem separaten Steuerschrank 47 untergebracht ist. Im Gleichrichtermodul 43 ist ein nicht dargestellter Demodulator angeordnet. Dieser ist über eine Signalleitung 48 unmittelbar mit der Steuereinrichtung 46 verbunden. Die von der Steuereinrichtung 46 generierten Signale zur Ansteuerung der im Wechselrichter 45 angeordneten Leistungshalbleiterschalter können somit über den Gleichspannungskreis 44 zu einem Demodulator des Wechselrichters 45 übertragen werden. Die an den Gate-Elektroden dieser Leistungshalbleiterschalter anzulegenden Steuerspannungen werden aus den Steuersignalen der Steuereinrichtung 46 im Demodulator generiert.

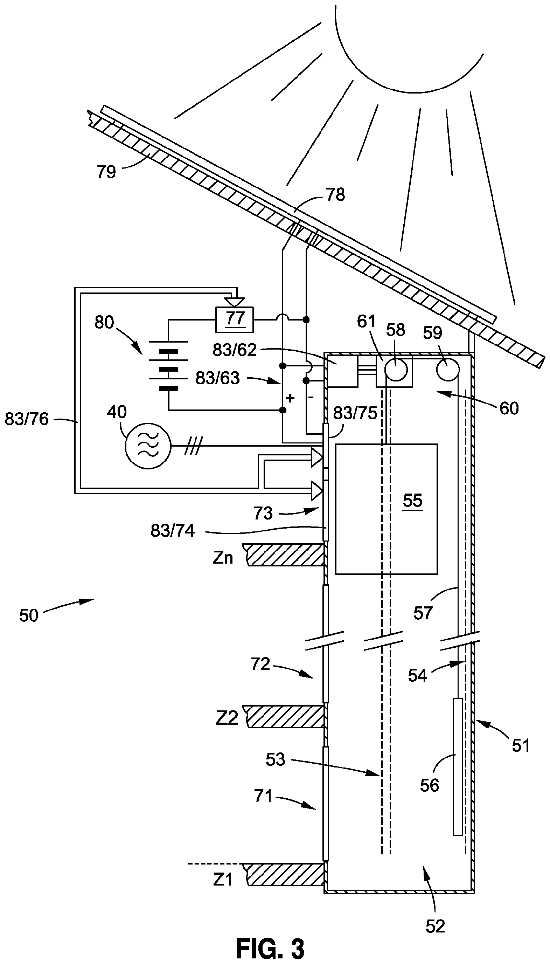

Figur 3 zeigt in schematischer Darstellung einen Teil eines mehrstöckigen Gebäudes 50 mit einer als Personentransportanlage dienenden Aufzugsanlage 51. Die Aufzugsanlage 51 verbindet mehrere Stockwerke Z₁, Z₂, ... Zₙ des Gebäudes 50 in vertikaler Richtung miteinander. Die Aufzugsanlage 51 umfasst einen Aufzugsschacht 52 mit vertikal angeordneten Führungsschienen 53, 54, an denen eine Aufzugskabine 55 und ein Gegengewicht 56 linear geführt sind. Die Aufzugskabine 55 und das Gegengewicht 56 sind durch ein Tragmittel 57 miteinander verbunden. Das Tragmittel 57 ist über eine Treibscheibe 58 und eine Umlenkscheibe 59 geführt, welche im Schachtkopf 60 des Aufzugsschachtes 52 angeordnet sind. Im Schachtkopf 60 sind ferner ein Wechselrichtermodul 62 und ein Drehstrom- Antriebsmotor 61 angeordnet, mittels dem die Treibscheibe 58 angetrieben werden kann. Das Wechselrichtermodul 62 ist ausgangsseitig mit dem Drehstrom- Antriebsmotor 61 und eingangsseitig mit einem Gleichspannungskreis 63 verbunden.

Die Aufzugskabine 55 kann über Schachttüren 71, 72, 73 betreten beziehungsweise verlassen werden, die in jedem Stockwerk Z₁, Z₂, ... Zₙ angeordnet sind und das jeweilige Stockwerk Z₁, Z₂, ... Zₙ vom Aufzugsschacht 52 trennen. Die Schachttüren 71, 72, 73 weisen aus Hohlprofilen hergestellte Türpfosten mit einem Türpfosten- Innenraum auf. Im Türpfosten- Innenraum der im obersten Stockwerk Zₙ angeordneten Schachttüre 73 sind eine Steuereinrichtung 74 und ein steuerbares Gleichrichtermodul 75 angeordnet. Das steuerbare Gleichrichtermodul 75 ist eingangsseitig mit einem Stromversorgungsnetz 40 und ausgangsseitig mit dem Gleichspannungskreis 63 verbunden. Die Steuereinrichtung 74 generiert Steuersignale, um Gate-Elektroden von im steuerbaren Gleichrichtermodul 75 und im Wechselrichtermodul 62 angeordneten Leistungshalbleiterschaltern unmittelbar anzusteuern.

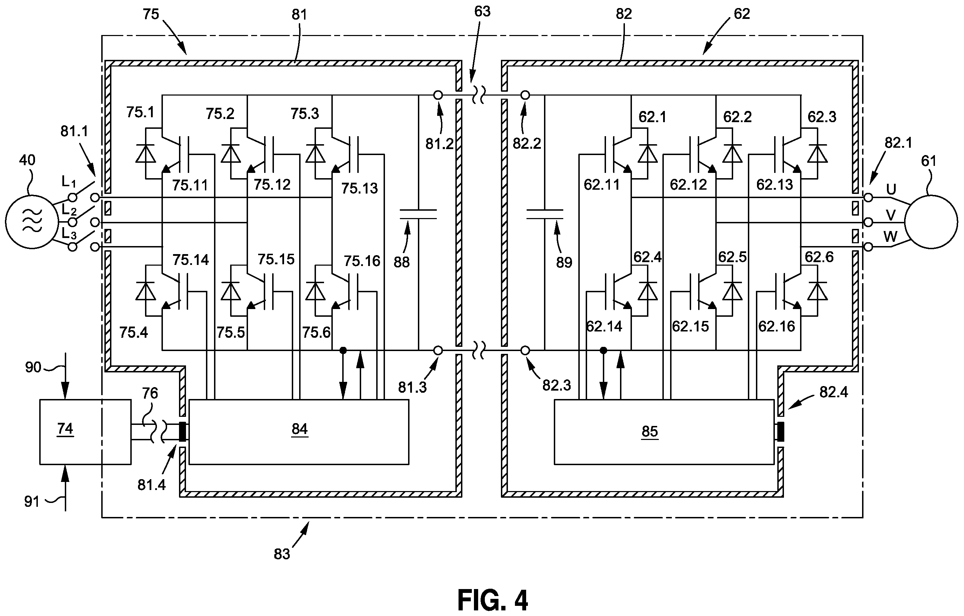

Die Steuersignale werden von der Steuereinrichtung 74 zum steuerbaren Gleichrichtermodul 75 mittels eines Feldbusses 76 übertragen. Im steuerbaren Gleichrichtermodul 75 ist ein Modulator, ein Demodulator und ein Busknoten (nicht dargestellt) angeordnet. In der Beschreibung zu Figur 4 werden diese drei Datenübertragungselemente zusammengefasst als Signalmodul 84, 85 bezeichnet.

Die für das im Aufzugschacht 52 angeordnete Wechselrichtermodul 62 generierten Steuersignale werden über den Modulator des Gleichrichtermoduls 75 auf den Gleichspannungskreis 63 aufmoduliert und durch den im Wechselrichtermodul 62 angeordneten Demodulator in Steuerspannungen für dessen Leistungshalbleiterschalter umgewandelt.

An den Feldbus 76 können auch weitere Vorrichtungen wie beispielsweise Sensoren, Sicherheitsschalter zur Überwachung der Schachttüren 71, 72, 73, das Schachtinformationssystem welches die Position der Aufzugskabine 55 im Aufzugsschacht 52 misst und dergleichen mehr angeschlossen werden, sofern sie einen Busknoten oder Master-Knoten aufweisen. Diese vorangehend erwähnten, weiteren Vorrichtungen und deren Einsatz sind an sich bekannt und sind deshalb in der Figur 3 nicht dargestellt.

Im vorliegenden Ausführungsbeispiel ist am Feldbus 76 noch ein Überwachungsmodul 77 angeschlossen, über das die Spannung im Gleichspannungskreis 63 geregelt wird. Der Gleichspannungskreis 63 wird nicht nur über das steuerbare Gleichrichtermodul 75 gespeist, sondern auch durch eine Photovoltaikanlage 78, die auf dem Dach 79 des Gebäudes 50 angeordnet ist. Zudem ist ein Energiespeicher 80 vorhanden, in dem elektrische Energie gespeichert werden kann. Im vorliegenden Ausführungsbeispiel ist dies ein Akkumulator, es kann aber selbstverständlich auch ein anderer Energiespeicher 80 wie beispielsweise ein Kondensator sein. Selbstverständlich kann durch das steuerbare Gleichrichtermodul 75 auch elektrische Energie vom Gleichspannungskreis 63 in das Stromversorgungsnetz 40 eingespeist beziehungsweise zurückgespeist werden. Damit die Steuereinrichtung 74 alle betriebsrelevanten Signale erhält, können diese Signale von den einzelnen Busknoten der am Feldbus 76 angeschlossenen Module 75, 77 und Vorrichtungen an die Steuereinrichtung 74 übertragen werden, weshalb der Feldbus 76 schematisch als Doppelpfeil dargestellt ist.

Das steuerbare Gleichrichtermodul 75, der Gleichspannungskreis 63 und das Wechselrichtermodul 62 bilden zusammen mit dem Feldbus 76 und demjenigen Teil der Steuereinrichtung 74, der die Steuerspannungen für die Gate-Elektroden generiert, einen dezentralisierten, modularen Frequenzumrichter 83, weshalb diese Bauelemente jeweils zwei, mit einem Schrägstrich getrennte Bezugszeichen aufweisen. Eine detailliertere Beschreibung dieses dezentralisierten modularen Frequenzumrichters 83 erfolgt nachfolgend in Zusammenhang mit der Figur 4, bei welcher der modulare dezentralisierte Frequenzumrichter 83 durch die strichpunktierte Linie abgegrenzt ist.

Die Figur 4 zeigt in schematischer Darstellung aber detaillierter, den Aufbau des in der Figur 3 dargestellten, modularen Frequenzumrichters 83. Demzufolge werden auch dieselben Bezugszeichen verwendet. Der besseren Übersicht wegen wird auf die Darstellung des Energiespeichers 80 und des Überwachungsmoduls 77 verzichtet.

Die strichpunktierte Linie umfasst alle Bauelemente des dezentralisierten modularen Frequenzumrichters 83. Das steuerbare Gleichrichtermodul 75 und das Wechselrichtermodul 62 weisen je ein Gehäuse 81, 82 auf. Die Gehäuse weisen eingangsseitig und ausgangsseitig Anschlüsse 81.1, 81.2, 81.3, 81.4, 82.1, 82.2, 82.3, 82.4 auf.

Das steuerbare Gleichrichtermodul 75 weist sechs Leistungshalbleiterschalter 75.1 bis 75.6 auf. Die Leistungshalbleiterschalter 75.1 bis 75.6 sind in bekannter Brückenschaltungs- Anordnung miteinander, sowie einerseits durch einen Schütz mit den Phasen L₁, L₂, L₃ des Stromversorgungsnetzes 40 und andererseits mit dem Gleichspannungskreis 63 verbunden. Die Gate-Elektroden 75.11 bis 75.16 der Leistungshalbleiterschalter 75.1 bis 75.6 sind mit einem Signalmodul 84 verbunden. Das Signalmodul 84 beinhaltet einen Busknoten, einen Modulator und einen Demodulator. Über den seriellen Feldbus 76 werden von der Steuereinrichtung 74 Steuersignale an das Signalmodul 84 übertragen. Im Signalmodul 84 werden die für das steuerbare Gleichrichtermodul 75 bestimmten Steuerspannungen repräsentierenden Steuersignale in, den einzelnen Gate-Elektroden 75.11 bis 75.16 zugeordnete Steuerspannungen umgewandelt. Ferner werden die für das Wechselrichtermodul 62 bestimmten Steuersignale auf den Gleichspannungskreis 63 aufmoduliert, symbolisiert durch die beiden, zwischen dem Gleichspannungskreis 63 und dem Signalmodul dargestellten Pfeile. Wie die beiden Pfeile zeigen, können nicht nur Signale auf den Gleichspannungskreis 63 aufmoduliert, sondern auch im Gleichspannungskreis 63 vorhandene Signale durch den Demodulator des Signalmoduls 84 abgerufen, und über den Busknoten und den Feldbus 76 an die Steuereinrichtung 74 übertragen werden.

Auch wenn die direkt an den Gate-Elektroden 75.11 bis 75.16 anliegenden Steuerspannungen erst im Signalmodul 84 erzeugt werden, sind die Gate-Elektroden 75.11 bis 75.16 trotzdem unmittelbar mit der Steuereinrichtung 74 verbunden, da im Signalmodul 84 lediglich eine direkte Umwandlung von Steuersignalen in Steuerspannungen erfolgt und nicht die Berechnung und Generierung der einzelnen Steuerspannungen beziehungsweise Steuerspannungskurven, um das Durchleitungsverhalten des zugeordneten Leistungshalbleiterschalters 75.1 bis 75.6 zu beeinflussen beziehungsweise zu steuern.

Die von der Steuereinrichtung 74 generierten Steuersignale werden in bekannter Weise in digitaler Form über den Feldbus 76 an das Signalmodul 84 des steuerbaren Gleichrichtermoduls 75 übertragen. Deshalb umfasst die strichpunktierte Linie des dezentralisierten modularen Frequenzumrichters 83 auch einen Teil der Steuereinrichtung 74. Das steuerbare Gleichrichtermodul 75 kann ferner weitere Elemente wie beispielsweise den dargestellten Kondensator 88 zur Glättung Gleichspannung aufweisen, die während des Betriebes der Personentransportanlage zwischen den Anschlüssen 81.2 und 81.3 vorhanden ist.

Wie das steuerbare Gleichrichtermodul 75, weist auch das Wechselrichtermodul 62 sechs Leistungshalbleiterschalter 62.1 bis 62.6 und ein Signalmodul 85 mit einem Modulator, Demodulator und Busknoten auf. Wie beim steuerbaren Gleichrichtermodul 75, sind die Leistungshalbleiterschalter 62.1 bis 62.6 des Wechselrichtermoduls 62 ebenfalls in bekannter Brückenschaltungs-Anordnung untereinander, sowie einerseits mit den Klemmen U, V, W des Drehstrom- Antriebsmotors 61 und andererseits mit dem Gleichspannungskreis 63 verbunden. Die Gate-Elektroden 62.11 bis 62.16 der Leistungshalbleiterschalter 62.1 bis 62.6 sind mit einem Signalmodul 85 verbunden.

Obwohl bereits das Gleichrichtermodul 75 einen Kondensator zur Glättung der Gleichspannung aufweist, beinhaltet auch das Wechselrichtermodul 62 einen Kondensator 89. Vorzugsweise ist der physische Aufbau des Wechselrichtermoduls 62 absolut identisch mit dem physischen Aufbau des steuerbaren Gleichrichtermoduls 75.

Dies hat enorme fertigungstechnische Vorteile, da zur Schaffung eines voll funktionsfähigen Frequenzumrichters 83 lediglich zwei identische Module 62, 75 durch ihre gleichspannungsführenden Anschlüsse 81.2, 82.2 und 81.3, 82.3 miteinander verbunden werden müssen. Ferner muss nur eines der Signalmodule 84, 85 mit der Steuereinrichtung 74 verbunden werden. Es ist somit offensichtlich, dass anstelle des Signalmoduls 84 des Gleichrichtermoduls 75, das Signalmodul 85 des Wechselrichtermoduls 62 mit dem Feldbus 76 verbunden werden kann, wobei dann logischerweise zumindest die Steuersignale für das steuerbare Gleichrichtermodul 75 aufmoduliert werden müssen. Da der Markt jährlich zigtausende Personentransportanlagen der vorgenannten Art benötigt, kann eine große Anzahl gleicher Module 62, 75 hergestellt werden, die dank Mengeneffekten sehr kostengünstig herstellbar sind.

Es ist auch möglich, dass weitere vom Feldbus 76 übertragenen Signale durch das Signalmodul 84 des Gleichrichtermoduls 75 auf den Gleichstromkreis 63 aufmoduliert werden, die nicht zur Ansteuerung des Wechselrichtermoduls 62 bestimmt sind. Zumindest ein Teil dieser Signale kann im Signalmodul 85 demoduliert und über den Busknoten des Signalmoduls 85 über einen weiteren Feldbus, der am Anschluss 82.4 anschließbar ist, an weitere Vorrichtungen wie beispielsweise Sensoren, Ausgabegeräte wie Bildschirme und Sicherheitsschalter zur Überwachung der Schachttüren 71, 72, 73 weitergeleitet werden. Selbstverständlich funktioniert die Signalübertragung auch in der Gegenrichtung, so dass der Gleichstromkreis 63 zumindest streckenweise die Funktion eines Feldbusses übernimmt.

Die Steuereinrichtung 74 generiert die Steuerspannungen repräsentierenden Bussignale mittels in der Steuereinrichtung 74 gespeicherter Algorithmen sowie unter Berücksichtigung von in der Steuereinrichtung 74 verarbeiteten betriebsrelevanten Signale wie beispielsweise Eingabesignale 90 und Messsignale 91. Das Eingabesignal 90 stammt beispielsweise aus einem nicht dargestellten Eingabeterminal. Das Messsignal 91 stammt beispielsweise aus einem nicht dargestellten Schachtinformationssystem der in Figur 3 gezeigten Aufzugsanlage 50.

Sobald ein Benutzer der Aufzugsanlage über das Eingabeterminal die Aufzugskabine 55 beispielsweise auf seine Etage Z₁ bestellt, wird ein Eingabesignal 90 an die Steuereinrichtung 74 übermittelt. Die Steuereinrichtung 74 errechnet die den Gate-Elektroden 62.11 bis 62.16 des Wechselrichtermoduls 62 zuzuführenden Steuerspannungen beziehungsweise im zeitlichen Ablauf, die Steuerspannungskurven unter Berücksichtigung der durch das Messsignal 91 übermittelten Position der Aufzugskabine 55 im Aufzugsschacht 52, so dass durch den Drehstrom- Antriebsmotor 61 die Aufzugskabine 55 beschleunigt, bewegt und gebremst wird. Die von der Steuereinrichtung 74 errechneten, den einzelnen Gate-Elektroden 62.11 bis 62.16 zugeordneten Steuerspannungskurven ermöglichen beispielsweise ein sanftes Beschleunigen und Bremsen der Aufzugskabine 55, ein möglichst stromsparendes Beschleunigen der Aufzugskabine 55 und dergleichen mehr.

Figur 5 zeigt in schematischer Darstellung aber detaillierter, den Aufbau des in der Figur 1 dargestellten, dezentralisierten modularen Frequenzumrichters 13. Demzufolge werden auch dieselben Bezugszeichen verwendet. Die strichpunktierte Linie umfasst alle Bauelemente des modularen Frequenzumrichters 13. Das steuerbare Gleichrichtermodul 15 und das Wechselrichtermodul 16 sind mit unterbrochenen Linien abgegrenzt. Das steuerbare Gleichrichtermodul 15 weist sechs Leistungshalbleiterschalter 15.1 bis 15.6 auf. Die Leistungshalbleiterschalter 15.1 bis 15.6 sind in bekannter Brückenschaltungs-Anordnung miteinander, sowie einerseits mit den Phasen L_{1,} L₂, L₃ des Stromversorgungsnetzes 40 und andererseits mit dem Gleichspannungskreis 19 verbunden. Die Gate-Elektroden 15.11 bis 15.16 der Leistungshalbleiterschalter 15.1 bis 15.6 sind mit dem Demodulator 17 verbunden. Über die Verbindung 23.1 greift der Demodulator die vom Modulator 20 auf den Gleichspannungskreis modulierten Steuersignale ab und wandelt diese in den einzelnen Gate-Elektroden zugeordnete Steuerspannungen um. Selbstverständlich kann auch die zur Wandlung der Steuersignale in Steuerspannungen benötigte Energie über die Verbindung 23.1 vom Gleichspannungskreis abgegriffen werden.

Auch wenn die an den Gate-Elektroden 15.11 bis 15.16 anliegenden Steuerspannungen erst im Demodulator 17 erzeugt werden, sind die Gate-Elektroden 15.11 bis 15.16 trotzdem unmittelbar mit der Steuereinrichtung 14 verbunden, da im Demodulator 17 lediglich eine direkte Umwandlung von Steuersignalen in Steuerspannungen erfolgt und nicht die Berechnung und Generierung der einzelnen Steuerspannungen beziehungsweise Steuerspannungskurven.

Die von der Steuereinrichtung 14 generierten Steuersignale sind beispielsweise Impulse unterschiedlicher Frequenz, wobei jedem Leistungshalbleiterschalter 15.1 bis 15.6 eine bestimmte Frequenz zugeordnet ist. Im Demodulator 17 wird dann beispielsweise die variable Amplitude dieser Frequenz herangezogen, um die an der Gate-Elektrode 15.11 bis 15.16 des zugeordneten Leistungshalbleiterschalters 15.1 bis 15.6 anliegende Steuerspannung zu erzeugen.

Die zur Ansteuerung der Gate-Elektroden 15.11 bis 15.16 notwendigen Steuersignale, welche durch den Modulator 20 auf den Gleichspannungskreis 19 moduliert werden, werden unmittelbar in der Steuereinrichtung 14 generiert und über die Steuerleitung 23 an den Modulator 20 übertragen. Deshalb umfasst die strichpunktierte Linie des dezentralisierten modularen Frequenzumrichters 13 auch einen Teil der Steuereinrichtung 14.

Der Modulator 20 kann selbstverständlich weitere Elemente wie beispielsweise nicht dargestellte Sensoren aufweisen, mittels denen der Gleichspannungskreis 19 überwacht werden kann. Deren Signale gelangen über die Signalleitung 24 zur Steuereinrichtung 14.

Wie das steuerbare Gleichrichtermodul 15, weist das Wechselrichtermodul 16 ebenfalls sechs Leistungshalbleiterschalter 16.1 bis 16.6 auf. Die Leistungshalbleiterschalter 16.1 bis 16.6 sind in bekannter Anordnung einerseits mit den Klemmen U, V, W des Drehstrom- Antriebsmotors 11 und andererseits mit dem Gleichspannungskreis 19 verbunden. Die Gate-Elektroden 16.11 bis 16.16 der Leistungshalbleiterschalter 16.1 bis 16.6 sind mit dem Demodulator 18 verbunden. Über die Verbindung 23.2 greift der Demodulator 18 die vom Modulator 20 auf den Gleichspannungskreis 19 modulierten Steuersignale ab und wandelt diese in den einzelnen Gate-Elektroden 16.11 bis 16.16 zugeordnete Steuerspannungen um. Der physische Aufbau des Wechselrichtermoduls 16 ist somit identisch mit dem physischen Aufbau des steuerbaren Gleichrichtermoduls 15.

Die Steuereinrichtung 14 generiert die Steuersignale mittels in der Steuereinrichtung 14 gespeicherter Algorithmen sowie unter Berücksichtigung von in der Steuereinrichtung 14 verarbeiteten betriebsrelevanten Signalen. Diese betriebsrelevanten Signale stammen beispielsweise aus den Sensoren 25, 26, welche das herannahen eines Benutzers erfassen. Sobald sich ein Benutzer einer Fahrtreppe oder einem Fahrsteig nähert, wird vom Sensor 25, 26 ein Signal an die Steuereinrichtung 14 übermittelt. Die Steuereinrichtung 14 errechnet die den Gate-Elektroden 16.11 bis 16.16 des Wechselrichtermoduls 16 zuzuführenden Steuerspannungen beziehungsweise im zeitlichen Ablauf die Steuerspannungskurven, so dass beispielsweise eine für den Drehstrom-Antriebsmotor 11 möglichst schonende Beschleunigung erreicht werden kann.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem in der Fahrtreppe der Figur 1 oder im Fahrsteig der Figur 2 eine Stromversorgung des Drehstrom- Antriebsmotors verwendet wird, wie sie in der Figur 3 dargestellt ist. Ferner kann bei allen Ausführungsbeispielen ein gesteuertes Gleichrichtermodul oder ein statisches Gleichrichtermodul verwendet werden.

Um eine Personentransportanlage der vorgenannten Art mit einem rückspeisefähigen, dezentralisierten, modularen Frequenzumrichter auszurüsten, werden erfindungsgemäß ein steuerbares Gleichrichtermodul, ein Wechselrichtermodul, zum Aufbau des Gleichspannungskreises, je eine Verbindungleitung für die Minuspole und die Pluspole der Module und ein Übertragungsmittel zur Übertragung der Steuersignale beziehungsweise Steuerspannungen zwischen der Steuereinrichtung und dem Wechselrichtermodul beziehungsweise zwischen der Steuereinrichtung und dem steuerbaren Gleichrichtermodul benötigt. Ferner muss in der Steuereinrichtung die notwendige Software zur Generierung der Steuersignale beziehungsweise Steuerspannungen implementiert werden. Die weiter oben erwähnten Signalmodule 84, 85 weisen nicht zwingend drei physisch in einen Modulator, Demodulator und Busknoten unterteilte Bereiche oder Bauteile auf. Das Signalmodul 84, 85 kann als physische Einheit aufgebaut sein und lediglich die drei Funktionen Modulator, Demodulator und Busknoten zur Verfügung stellen.

Selbstverständlich können auch bestehende Personentransportanlagen modernisiert werden, indem deren bestehender Wechselrichter oder Frequenzumrichter durch einen dezentralisierten, modularen Frequenzumrichter oder Wechselrichter ersetzt wird. Selbstverständlich muss dabei die bestehende Steuereinrichtung angepasst oder gegebenenfalls ersetzt werden, so dass diese in der Lage ist, die betriebsnotwendigen Steuerspannungen der Leistungshalbleiterschalter zu generieren.

## Patentansprüche

1. Personentransportanlage (1, 31, 51), aufweisend einen Drehstrom- Antriebsmotor (11, 41, 61) und eine Steuereinrichtung (14, 46, 74), wobei die Steuereinrichtung (14, 46, 74) betriebsrelevante Signale (90, 91) der Personentransportanlage (1, 31, 51) verarbeitet und den Drehstrom- Antriebsmotor (11, 41, 61) unter Berücksichtigung der betriebsrelevanten Signale (90, 91) steuert, wobei die Personentransportanlage (1, 31, 51) zumindest ein Wechselrichtermodul (16, 45, 62) mit Leistungshalbleiterschaltern (16.1 bis 16.6, 62.1 bis 62.6) aufweist, wobei die Gate- Elektroden (16.11 bis 16.16, 62.11 bis 62.16) der Leistungshalbleiterschalter (16.1 bis 16.6, 62.1 bis 62.6) unmittelbar durch die Steuereinrichtung (14, 46, 74) angesteuert sind und das Wechselrichtermodul (16, 45, 62) eingangsseitig mit einer Gleichspannungsquelle (15, 43, 75, 78, 80) und ausgangsseitig mit dem Drehstrom- Antriebsmotor (11, 41, 61) verbunden ist, wobei zwischen der Gleichspannungsquelle (15, 43, 75, 78, 80) und dem Wechselrichtermodul (16, 45, 62) ein Gleichspannungskreis (19, 44, 63) vorhanden ist, **dadurch gekennzeichnet, dass** durch die Steuereinrichtung (14, 46, 74) auf den Gleichspannungskreis (19, 44, 63) modulierbare Ansteuersignale generierbar sind und das Wechselrichtermodul (16, 45, 62) einen Demodulator (18, 85) aufweist, durch welchen Demodulator (18, 85) die Ansteuersignale in, den einzelnen Gate- Elektroden (16.11 bis 16.16, 62.11 bis 62.16) der Leistungshalbleiterschalter (16.1 bis 16.6, 62.1 bis 62.6) zugeordnete Steuerspannungen wandelbar sind.

2. Personentransportanlage (1, 31, 51) nach Anspruch 1, wobei die Gleichspannungsquelle eine Photovoltaikanlage (78) mit einem Gleichspannungs-Energiespeicher (80) ist.

3. Personentransportanlage (1, 31, 51) nach Anspruch 1 oder 2, wobei die Personentransportanlage (1, 31, 51) ein als Gleichspannungsquelle dienendes, steuerbares Gleichrichtermodul (15, 75) mit Leistungshalbleiterschaltern (15.1 bis 15.6, 75.1 bis 75.6) aufweist, wobei die Gate- Elektroden (15.11 bis 15.16, 75.11 bis 75.16) der Leistungshalbleiterschalter (15.1 bis 15.6, 75.1 bis 75.6) dieses Gleichrichtermoduls (15, 75) unmittelbar durch die Steuereinrichtung (14, 74) angesteuert sind und das steuerbare Gleichrichtermodul (15, 75) eingangsseitig mit einem Stromversorgungsnetz (40) und ausgangsseitig mit dem Wechselrichtermodul (16, 45, 62) verbunden ist.

4. Personentransportanlage (1, 31, 51) nach Anspruch 3, wobei mindestens ein Kondensator (88, 89) und/oder eine induktive Last im Gleichspannungskreis (19, 63) angeordnet ist.

5. Personentransportanlage (1, 31, 51) nach Anspruch 3 oder 4, wobei im Gleichspannungskreis (19, 44, 63) ein Überwachungsmodul (77) angeordnet ist und aufgrund der Überwachungssignale des Überwachungsmoduls (77) für das steuerbare Gleichrichtermodul (15, 75) Steuerspannungen durch die Steuereinrichtung (14, 46, 74) generierbar sind, durch welche entweder elektrische Energie vom Stromversorgungsnetz (40) in den Gleichspannungskreis (19, 63) oder elektrische Energie vom Gleichspannungskreis (19, 63) in das Stromversorgungsnetz (40) einspeisbar sind.

6. Personentransportanlage (1, 31, 51) nach einem der Ansprüche 3 bis 5, wobei durch die Steuereinrichtung (14, 46, 74) auf den Gleichspannungskreis (19, 63) modulierbare Ansteuersignale generierbar sind, wobei das steuerbare Gleichrichtermodul (15, 75) einen Demodulator (17, 84) aufweist, durch welchen Demodulator (17, 84) die Ansteuersignale in, den einzelnen Gate- Elektroden (15.11 bis 15.16, 75.11 bis 75.16) der Leistungshalbleiterschalter (15.1 bis 15.6, 75.1 bis 75.6) zugeordnete Steuerspannungen wandelbar sind.

7. Personentransportanlage (1, 31, 51) nach einem der Ansprüche 3 bis 5, wobei die an den Gate- Elektroden (15.11 bis 15.16, 75.11 bis 75.16) der Leistungshalbleiterschalter (15.1 bis 15.6, 75.1 bis 75.6) des steuerbaren Gleichrichtermoduls anliegenden Steuerspannungen durch die Steuereinrichtung (14, 46, 74) erzeugbar sind.

8. Personentransportanlage (1, 31, 51) nach einem der Ansprüche 1 bis 5, wobei das Wechselrichtermodul (16, 45, 62) einen Busknoten (85) aufweist und die Steuereinrichtung (14, 46, 74) über einen Feldbus (76) mit dem Wechselrichtermodul (16, 45, 62) verbunden ist.

9. Personentransportanlage (1, 31, 51) nach einem der Ansprüche 3 bis 5, wobei das Gleichrichtermodul (15, 75) einen Busknoten (84) aufweist und die Steuereinrichtung (14, 46, 74) über einen Feldbus (76) mit dem steuerbaren Gleichrichtermodul (15, 75) verbunden ist.

10. Personentransportanlage (1, 31, 51) nach einem der Ansprüche 1 bis 9, wobei das Wechselrichtermodul (16, 45, 62) im Umfeld des Drehstrom- Antriebsmotors (11, 41, 61) angeordnet ist.

11. Personentransportanlage (1, 31, 51) nach einem der Ansprüche 3 bis 10, wobei das Gleichrichtermodul (15, 75) im Umfeld der Steuereinrichtung (14, 46, 74) angeordnet ist.

12. Personentransportanlage (1, 31, 51) nach einem der Ansprüche 3 bis 11, wobei die Personentransportanlage (1, 31, 51) eine Fahrtreppe (1) oder ein Fahrsteig (31) ist und das Wechselrichtermodul (16, 45, 62) in einem ersten Balustradensockel (10) und das Gleichrichtermodul (15, 75) in einem zweiten Balustradensockel (10) der Fahrtreppe (1) oder des Fahrsteiges (31) angeordnet sind, so dass in den Balustradensockel (10) geführte, umlaufende Handläufe (3, 33) durch die Abwärme des Gleichrichtermoduls (15, 75) beziehungsweise Wechselrichtermoduls (16, 45, 62) erwärmbar sind.

13. Personentransportanlage (1, 31, 51) nach einem der Ansprüche 3 bis 12, wobei die Personentransportanlage (1, 31, 51) eine Fahrtreppe (1) oder Fahrsteig (31) ist und mit der Abwärme des Wechselrichtermoduls (16, 45, 62) und des Gleichrichtermoduls (15, 75) ein Stufenband (5) der Fahrtreppe (1) oder ein Palettenband (35) des Fahrsteiges (31) erwärmbar ist.

14. Personentransportanlage (1, 31, 51) nach einem der Ansprüche 3 bis 11, wobei die Personentransportanlage (1, 31, 51) eine Aufzugsanlage (51) ist und das Wechselrichtermodul (16, 45, 62) in einem Aufzugsschacht (52) der Aufzugsanlage (51) und das Gleichrichtermodul (15, 75) in einem Türpfosten (71, 72, 73) einer Schachttüre des Aufzugsschachtes (52) angeordnet sind.

15. Personentransportanlage (1, 31, 51) nach einem der Ansprüche 3 bis 14, wobei das Wechselrichtermodul (16, 45, 62) und das steuerbare Gleichrichtermodul (15, 75) baugleich sind.

## Claims

1. A passenger transport system (1, 31, 51) comprising a three-phase AC drive motor (11, 41, 61) and a control device (14, 46, 74), wherein the control device (14, 46, 74) processes operation signals (90, 91) of the passenger transport system (1, 31, 51) and controls the three-phase AC drive motor (11, 41, 61) taking into account the operation signals (90, 91), wherein the passenger transport system (1, 31, 51) comprises at least one inverter module (16, 45, 62) with power semiconductor switches (16.1 to 16.6, 62.1 to 62.6), wherein the gate electrodes (16.11 to 16.16, 62.11 to 62.16) of the power semiconductor switches (16.1 to 16.6, 62.1 to 62.6) are triggered directly by the control device (14, 46, 74) and the inverter module (16, 45, 62) is connected to a DC voltage source (15, 43, 75, 78, 80) on the input side and to the three-phase AC drive motor (11, 41, 61) on the output side, wherein there is a DC voltage circuit (19, 44, 63) between the DC voltage source (15, 43, 75, 78, 80) and the inverter module (16, 45, 62), **characterized in that** the control device (14, 46, 74) can generate trigger signals that can be modulated to the DC voltage circuit (19, 44, 63) and the inverter module (16, 45, 62) comprises a demodulator (18, 85), the demodulator (18, 85) being able to convert the trigger signals into control voltages that are assigned to the individual gate electrodes (16.11 to 16.16, 62.11 to 62.16) of the power semiconductor switches (16.1 to 16.6, 62.1 to 62.6).

2. A passenger transport system (1, 31, 51) according to claim 1, wherein the DC voltage source is a photovoltaic system (78) comprising a DC power storage device (80).

3. A passenger transport system (1,31,51) according to claim 1 or 2, wherein the passenger transport system (1, 31, 51) comprises a controllable rectifier module (15, 75) with power semiconductor switches (15.1 to 15.6, 75.1 to 75.6) that serves as a DC voltage source, wherein the gate electrodes (15.11 to 15.16, 75.11 to 75.16) of the power semiconductor switches (15.1 to 15.6, 75.1 to 75.6) of this rectifier module (15, 75) are triggered directly by the control device (14, 74) and the controllable rectifier module (15, 75) is connected to a power supply network (40) on the input side and to the inverter module (16, 45, 62) on the output side.

4. A passenger transport system (1,31,51) according to claim 3, wherein at least one capacitor (88, 89) and/or one inductive load is arranged in the DC voltage circuit (19, 63).

5. A passenger transport system (1,31,51) according to claim 3 or 4, wherein a monitoring module (77) is arranged in the DC voltage circuit (19, 44, 63) and control voltages can be generated for the controllable rectifier module (15, 75) by the control device (14, 46, 74) on the basis of the monitoring signals of the monitoring module (77), it being possible to feed either electrical energy from the power supply network (40) to the DC voltage circuit (19, 63) or electrical energy from the DC voltage circuit (19, 63) to the power supply network (40) by means of these control voltages.

6. A passenger transport system (1,31,51) according to any of claims 3 to 5, wherein trigger signals that can be modulated to the DC voltage circuit (19, 63) can be generated by the control device (14, 46, 74), wherein the controllable rectifier module (15, 75) comprises a demodulator (17, 84), the demodulator (17, 84) being able to convert the trigger signals into control voltages that are assigned to the individual gate electrodes (15.11 to 15.16, 75.11 to 75.16) of the power semiconductor switches (15.1 to 15.6, 75.1 to 75.6).

7. A passenger transport system (1,31,51) according to any of claims 3 to 5, it being possible for the control device (14, 46, 74) to generate the control voltages applied to the gate electrodes (15.11 to 15.16, 75.11 to 75.16) of the power semiconductor switches (15.1 to 15.6, 75.1 to 75.6) of the controllable rectifier module.

8. A passenger transport system (1, 31, 51) according to any of claims 1 to 5, wherein the inverter module (16, 45, 62) comprises a bus node (85) and the control device (14, 46, 74) is connected to the inverter module (16, 45, 62) via a field bus (76).

9. A passenger transport system (1, 31, 51) according to any of claims 1 to 5, wherein the rectifier module (15, 75) comprises a bus node (84) and the control device (14, 46, 74) is connected to the controllable rectifier module (15, 75) via a field bus (76).

10. A passenger transport system (1, 31, 51) according to any of claims 1 to 9, wherein the inverter module (16, 45, 62) is arranged in the vicinity of the three-phase AC drive motor (11, 41, 61).

11. A passenger transport system (1, 31, 51) according to any of claims 1 to 10, wherein the rectifier module (15, 75) is arranged in the vicinity of the control device (14, 46, 74).

12. A passenger transport system (1, 31, 51) according to any of claims 1 to 11, wherein the passenger transport system (1, 31, 51) is an escalator (1) or a moving walkway (31) and the inverter module (16, 45, 62) is arranged in a first balustrade base (10) and the rectifier module (15, 75) is arranged in a second balustrade base (10) of the escalator (1) or the moving walkway (31) such that revolving handrails (3, 33) guided into the balustrade base (10) can be heated by the waste heat of the rectifier module (15, 75) or inverter module (16, 45, 62).

13. A passenger transport system (1, 31, 51) according to any of claims 1 to 12, wherein the passenger transport system (1, 31, 51) is an escalator (1) or moving walkway (31) and a step belt (5) of the escalator (1) or a pallet belt (35) of the moving walkway (31) can be heated with the waste heat of the inverter module (16, 45, 62) and of the rectifier module (15, 75).

14. A passenger transport system (1, 31, 51) according to any of claims 1 to 11, wherein the passenger transport system (1, 31, 51) is an elevator system (51) and the inverter module (16, 45, 62) is arranged in an elevator shaft (52) of the elevator system (51), and the rectifier module (15, 75) is arranged in a door jamb (71, 72, 73) of a landing door of the elevator shaft (52).

15. A passenger transport system (1, 31, 51) according to any of claims 1 to 14, wherein the inverter module (16, 45, 62) and the controllable rectifier module (15, 75) are identical in construction.

## Revendications

1. Installation de transport de personnes (1, 31, 51), comprenant un moteur d'entraînement triphasé (11, 41, 61) et un dispositif de commande (14, 46, 74), le dispositif de commande (14, 46, 74) traitant des signaux (90, 91), pertinents pour le fonctionnement, de l'installation de transport de personnes (1, 31, 51) et commandant le moteur d'entraînement triphasé (11, 41, 61) en tenant compte des signaux (90, 91) pertinents pour le fonctionnement, l'installation de transport de personnes (11, 31, 51) comprenant au moins un module onduleur (16, 45, 62) doté de commutateurs de puissance à semi-conducteurs (16.1 à 16.6, 62.1 à 62.6), les électrodes de grille (16.11 à 16.16, 62.11 à 62.16) des commutateurs de puissance à semi-conducteurs (16.1 à 16.6, 62.1 à 62.6) étant excitées directement au moyen du dispositif de commande (14, 46, 74) et le module onduleur (16, 45, 62) étant connecté, côté entrée, à une source de tension continue (15, 43, 75, 78, 80) et, côté sortie, au moteur d'entraînement triphasé (11, 41, 61), un circuit à tension continue (19, 44, 63) étant présent entre la source de tension continue (15, 43, 75, 78, 80) et le module onduleur (16, 45, 62),
**caractérisée en ce que**
des signaux d'excitation pouvant être modulés sur le circuit à tension continue (19, 44, 63) peuvent être générés au moyen du dispositif de commande (14, 46, 74) et le module onduleur (16, 45, 62) comprend un démodulateur (18, 85), démodulateur (18, 85) au moyen duquel les signaux d'excitation peuvent être convertis en tensions de commande associées aux électrodes de grille (16.11 à 16.16, 62.11 à 62.16) individuelles des commutateurs de puissance à semi-conducteurs (16.1 à 16.6, 62.1 à 62.6).

2. Installation de transport de personnes (1, 31, 51) selon la revendication 1, dans laquelle la source de tension continue est une installation photovoltaïque (78) comprenant un accumulateur d'énergie à tension continue (80).

3. Installation de transport de personnes (1, 31, 51) selon la revendication 1 ou 2, l'installation de transport de personnes (1, 31, 51) comprenant un module redresseur (15, 75), pouvant être commandé, servant de source de tension continue et doté de commutateurs de puissance à semi-conducteurs (15.1 à 15.6, 75.1 à 75.6), les électrodes de grille (15.11 à 15.16, 75.11 à 75.16) des commutateurs de puissance à semi-conducteurs (15.1 à 15.6, 75.1 à 75.6) de ce module redresseur (15, 75) étant excitées directement au moyen du dispositif de commande (14, 74), et le module redresseur (15, 75) pouvant être commandé étant connecté, côté entrée, à un réseau d'alimentation électrique (40) et, côté sortie, au module onduleur (16, 45, 62).

4. Installation de transport de personnes (1, 31, 51) selon la revendication 3, dans laquelle au moins un condensateur (88, 89) et/ou une charge inductive sont disposés dans le circuit à tension continue (19, 63).

5. Installation de transport de personnes (1, 31, 51) selon la revendication 3 ou 4, dans laquelle un module de surveillance (77) est disposé dans le circuit à tension continue (19, 63) et, sur la base des signaux de surveillance du module (77) de surveillance du module redresseur (15, 75) pouvant être commandé, des tensions de commande peuvent être générées au moyen du dispositif de commande (14, 46, 74), tensions de commande au moyen desquelles soit de l'énergie électrique peut être injectée à partir du réseau d'alimentation électrique (40) dans le circuit à tension continue (19, 63), soit de l'énergie électrique peut être injectée à partir du circuit à tension continue (19, 63) dans le réseau d'alimentation électrique (40).

6. Installation de transport de personnes (1, 31, 51) selon l'une des revendications 3 à 5, dans laquelle des signaux d'excitation pouvant être modulés sur le circuit à tension continue (19, 63) peuvent être générés au moyen du dispositif de commande (14, 46, 74), dans laquelle le module redresseur (15, 75) pouvant être commandé comprend un démodulateur (17, 84), démodulateur (17, 84) au moyen duquel les signaux d'excitation peuvent être convertis en tensions de commande associées aux électrodes de grille (15.11 à 15.16, 75.11 à 75.16) individuelles des commutateurs de puissance à semi-conducteurs (15.1 à 15.6, 75.1 à 75.6).

7. Installation de transport de personnes (1, 31, 51) selon l'une des revendications 3 à 5, dans laquelle les tensions de commande appliquées aux électrodes de grille (15.11 à 15.16, 75.11 à 75.16) des commutateurs de puissance à semi-conducteurs (15.1 à 15.6, 75.1 à 75.6) du module redresseur pouvant être commandé peuvent être produites au moyen du dispositif de commande (14, 46, 74).

8. Installation de transport de personnes (1, 31, 51) selon l'une des revendications 1 à 5, dans laquelle le module onduleur (16, 45, 62) comprend un noeud de bus (85) et le dispositif de commande (14, 46, 74) est connecté au module onduleur (16, 45, 62) par le biais d'un bus de terrain (76).

9. Installation de transport de personnes (1, 31, 51) selon l'une des revendications 3 à 5, dans laquelle le module redresseur (15, 75) comprend un noeud de bus (84) et le dispositif de commande (14, 46, 74) est connecté au module redresseur (15, 75) pouvant être commandé par le biais d'un bus de terrain (76).

10. Installation de transport de personnes (1, 31, 51) selon l'une des revendications 1 à 9, dans laquelle le module onduleur (16, 45, 62) est disposé dans l'environnement du moteur d'entraînement triphasé (11, 41, 61).

11. Installation de transport de personnes (1, 31, 51) selon l'une des revendications 3 à 10, dans laquelle le module redresseur (15, 75) est disposé dans l'environnement du dispositif de commande (14, 46, 74).

12. Installation de transport de personnes (1, 31, 51) selon l'une des revendications 3 à 11, l'installation de transport de personnes (1, 31, 51) étant un escalier roulant (1) ou un trottoir roulant (31) et le module onduleur (16, 45, 62) étant disposé dans un premier socle de balustrade (10) et le module redresseur (15, 75) étant disposé dans un deuxième socle de balustrade (10) de l'escalier roulant (1) ou du trottoir roulant (31), de sorte que des mains courantes (3, 33) en circulation guidées dans les socles de balustrade (10) puissent être réchauffées par la chaleur perdue du module redresseur (15, 75), respectivement du module onduleur (16, 45, 62).

13. Installation de transport de personnes (1, 31, 51) selon l'une des revendications 3 à 12, l'installation de transport de personnes (1, 31, 51) étant un escalier roulant (1) ou un trottoir roulant (31) et une bande de marches (5) de l'escalier roulant (1) ou une bande de palettes (35) du trottoir roulant (31) pouvant être réchauffées à l'aide de la chaleur perdue du module onduleur (16, 45, 62) et du module redresseur (15, 75).

14. Installation de transport de personnes (1, 31, 51) selon l'une des revendications 3 à 11, l'installation de transport de personnes (1, 31, 51) étant une installation d'ascenseur (51) et le module onduleur (16, 45, 62) étant disposé dans une cage d'ascenseur (52) de l'installation d'ascenseur (51) et le module redresseur (15, 75) étant disposé dans un montant de porte (71, 72, 73) d'une porte palière de la cage d'ascenseur (52).

15. Installation de transport de personnes (1, 31, 51) selon l'une des revendications 3 à 14, dans laquelle le module onduleur (16, 45, 62) et le module redresseur (15, 75) pouvant être commandé sont de construction identique.
